Europäisches Patentamt

European Patent Office

Office européen des brevets

(19)

(11) Veröffentlichungsnummer: **0 199 885**
**B1**

(12) **EUROPÄISCHE PATENTSCHRIFT**

(45) Veröffentlichungstag der Patentschrift: **16.08.90**

(21) Anmeldenummer: **86100335.8**

(22) Anmeldetag: **13.01.86**

(51) Int. Cl.⁵: **B 60 G 3/00**

(54) **Radführungslenker sowie ein Verfahren zu seiner Herstellung.**

(30) Priorität: **29.03.85 DE 3511495**

(43) Veröffentlichungstag der Anmeldung:
**05.11.86 Patentblatt 86/45**

(45) Bekanntmachung des Hinweises auf die
Patenterteilung:
**16.08.90 Patentblatt 90/33**

(84) Benannte Vertragsstaaten:
**DE FR GB IT**

(56) Entgegenhaltungen:
**GB-A-2 145 797**

**PATENT ABSTRACTS OF JAPAN, Band 7, Nr.
187 (M-236)1332r, 16. August 1983; & JP - A - 58
89409 (TOYOTA) 27.05.1983**
**PATENT ABSTRACTS OF JAPAN, Band 7, Nr.
187 (M-236)1332r, 16. August 1983; & JP - A - 58
89410 (TOYOTA) 27.05.1983**
**PATENT ABSTRACTS OF JAPAN, Band 8, Nr. 54
(M-282)1491r, 10. März 1984; & JP - A - 58 206
407 (MITSUBISHI RAYON) 01.12.1983**

(73) Patentinhaber: **Dr.Ing.h.c. F. Porsche
Aktiengesellschaft
Porschestrasse 42
D-7000 Stuttgart 40 (DE)**

(72) Erfinder: **Wehr, Thomas, Dipl.-Ing.
Bauernstrasse 133
D-7257 Ditzingen (DE)**
Erfinder: **Mast, Peter, Dipl.-Ing.
Breslauer Strasse 22
D-7031 Ehningen (DE)**

Courier Press, Leamington Spa, England.

## Beschreibung

Die Erfindung bezieht sich auf einen Radführungslenker und ein Verfahren zu seiner Herstellung nach dem Oberbegriff des Anspruchs 1.

Es sind verschiedene Bauteile, wie Flugzeugflügel, Blattfedern und dergleichen sowie Verfahren zur Herstellung dieser Bauteile aus einem Faserverbundwerkstoff bekannt (DE-PS 30 14 034, DE-EP 0 084 101), der in einen Autoklav zur Fertigstellung dieser Bauteile ausgehärtet wird. Andere Bauteile wie Radführungslenker für Kraftfahrzeuge, die ebenfalls den Vorteil eines geringen Gewichts und gleichzeitig der hohen Haltbarkeit aufweisen sollen, bestehen in bekannter Weise aus einem Leichtmetallwerkstoff.

Der Erfindung liegt die Aufgabe zugrunde, einen Radführungslenker und ein Verfahren zur Herstellung eines solchen Radführungslenkers zu schaffen, der den Vorteil einer weiteren Gewichtsverminderung bei gleichzeitiger einfacher Fertigung aufweist. Desweiteren soll durch ein abgestimmtes Zusammenformen der einzelnen Lenkerteile ein Radführungslenker erzielt werden, der mit optimalen Festigkeitseigenschaften herstellbar ist, die eine Anpassung an die jeweiligen Belastungsanforderungen gewährleisten.

Diese Aufgabe wird erfindungsgemäß durch die kennzeichnenden Merkmale der Ansprüche 1, 10 und 11 gelöst. Weitere vorteilhafte Ausbildungen der Erfindung beinhalten die Unteransprüche.

Der aus Faserverbundmaterial hergestellte Radführungslenker weist einen Grundkörper aus Hartschaum entsprechend der Grundform des Lenkers auf. Um diesen Grundkörper herum werden Verstärkungen wie Innen- und Außenprofilleisten sowie Deckplatten maßgerecht und in einer Endform herumgebaut, wobei alle diese Bauteile in einem weichen und aushärtbaren Zustand sind.

Diese Bauteile können an die Belastungsanforderungen angepasst werden, d.h. die Dicke sowie die Art des Fasermaterials und die Dichte kann beliebig gewählt werden. Es ist somit möglich, das Faserverbundmaterial in angemessener Größe auf den Bereich des Grundkörpers aufzubringen, der einer Verstärkung bedarf. Diese mögliche Anwendung des weichen Faserverbundmaterials verleiht dem Bauteil in Verbindung mit dem Grundkörper eine hohe und gegebenenfalls gerichtete Steifigkeit. Dieser Vorteil wird noch unterstützt durch eine gezielte Ausrichtung der Fasern der Innen- und Außenprofilleisten sowie der Deckplatten.

Durch die gemeinsame Aushärtung aller den Lenker bildenden Teile in einen Autoklav werden nachträgliche Anpassungen der Bauteile vermieden, mit dem in einem Arbeitsgang der Lenker fertigbar ist.

Ein Ausführungsbeispiel der Erfindung ist in der Zeichnung dargestellt und wird nachfolgend näher beschrieben. Es zeigt

Fig. 1 eine schaubildliche Ansicht auf einen Radführungslenker mit seinen einzelnen Bauteilen,

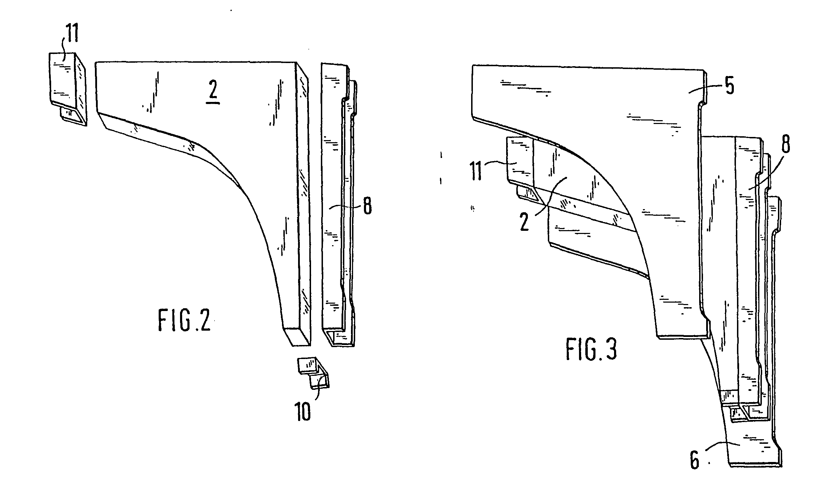

Fig. 2 einen ersten Verfahrensschritt zur Herstellung des Lenkers,

Fig. 3 einen zweiten Verfahrensschritt zum Herstellen des Lenkers,

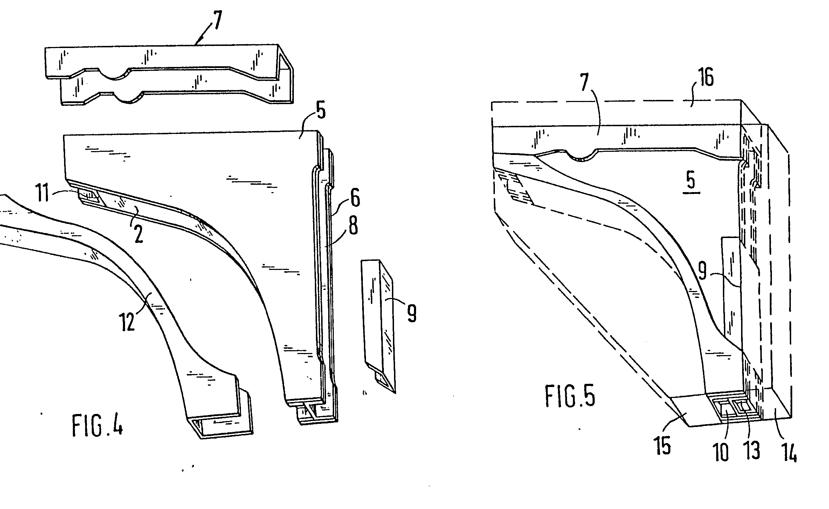

Fig. 4 einen dritten Verfahrensschritt zum Herstellen des Lenkers,

Fig. 5 ein vierter Verfahrensschritt zur Herstellung des Lenkers mit angedeuteten Stützwerkzeugen, und

Fig. 6 der fertig hergestellten Radführungslenker.

Der Radführungslenker 1 ist beispielsweise als Dreiecklenker ausgeführt und umfasst im wesentlichen einen Grundkörper 2, der an seiner oberen Fläche 3 sowie an seiner unteren Fläche 4 jeweils mit einer Deckplatte 5, 6 versehen ist. Am Umfang des Grundkörpers 2 ist an seiner Vorderseite V eine im Querschnitt U-förmige Außenprofilleiste 7 und an seiner Längsseite L eine Innenprofilleiste 8 sowie eine im Querschnitt U-förmige Außenprofilleiste 9 vorgesehen. Ebenfalls an der Rückseite und an der Innenseite J sind weitere Teilstücke von Innenprofilleisten 10, 11 und eine leicht gebogene Außenprofilleiste 12 vorgesehen. Diese Leisten bilden zusammen einen Hohlträger.

Der Grundkörper 3 besteht aus isotropem Material, z.B. einem geschlossenzelligen Polyimid-Hartschaum und die übrigen Bauteile des Lenkers 1, wie die Profilleisten 7 bis 12 und die Deckplatten 5, 6 bestehen aus einem Faserverbundwerkstoff mit Hochleistungsfaser. Der Faserverlauf der Profilleisten ist überwiegend uni-direktional und derder Deckplatten kann quasi isotrop sein.

Die Bauteile der Lenker 1 werden in einem weichen, aushärtbaren Zustand des Faserverbundmaterials in die in der Zeichnung dargestellte Form gebracht, wozu entfernbare innere Formkerne 13 für die Innenprofilleisten 8, 10 und 11 und äußeren Stützelemente 14, 15, 16 für die Außenprofilleisten 7, 9 und 12 verwendet werden.

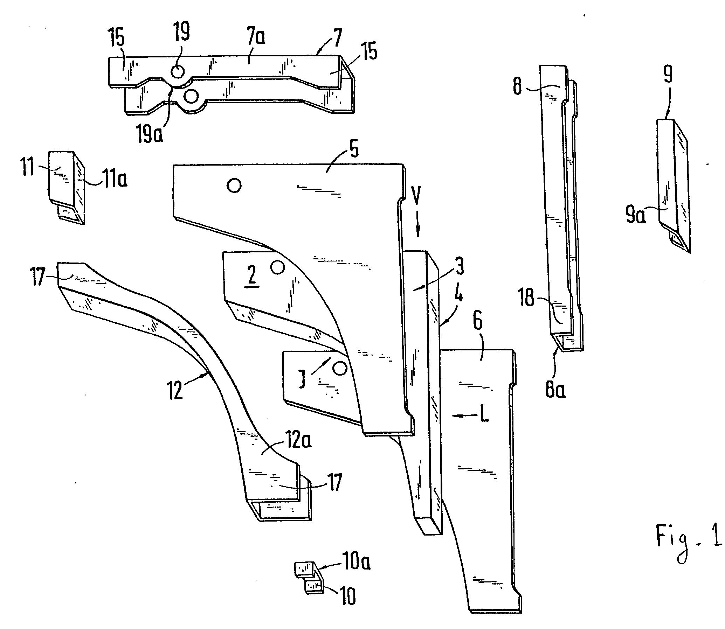

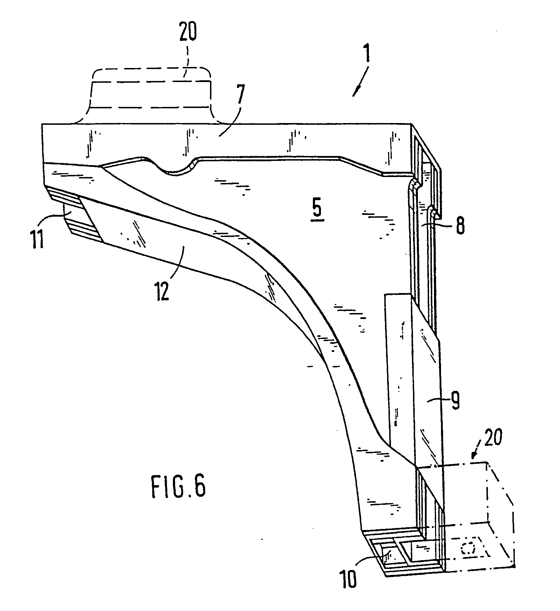

Wie am fertig hergestellten Lenker 1 gemäß Fig. 6 zu erkennen ist, sind die Innenprofilleisten 8, 10 und 11 mit ihrem jeweiligen Steg 8a, 10a und 11a (Fig. 1) am Grundkörper 2 anliegend, wobei die Schenkel sich nach außen erstrecken und bündig mit der Oberfläche des Grundkörpers 2 verlaufen. Die beiden Deckplatten 5 und 6 schließen die Oberfläche des Grundkörpers 2 ab und erstrecken sich bis über die Schenkel der Innenprofilleisten 8, 10 und 11. Die Außenprofilleisten 7, 9 und 12 übergreifen mit ihren Schenkeln 7a, 9a und 12a die Deckplatten 5 und 6 randseitig und liegen mit ihrem Steg dicht an den Rändern der Innenprofilleiste 8 bzw. der Deckplatten 5, 6 an.

Die Innenprofilleiste 8 an der Längsseite L des Lenkers 1 bildet mit der Außenprofilleiste 9 einen Hohlträger. In diesem derart verstärkten Endbereich des Lenkers 1 sind zur weiteren Verstärkung flächige Verbreiterungen 17 und 18 an den Schenkeln 7a und 12a der Profilleisten 7 und 12 vorgesehen.

Zur integrierten Anordnung von Lageraugen 20 am Lenker 1 ist es möglich, den Grundkörper 2, die Lenkerbauteile, wie die Profilleisten 7, 8 oder 9 und die Deckplatten 5, 6 entsprechend auszubilden, wie es in Fig. 6 mit gestrichelten Linien dargestellt ist. Ebenfalls ist eine Lagerung 19 für einen Stabilisatorlenker 1 in der Profilleiste 7 möglich.

Das Verfahren zum Herstellen des Radführungslenkers 1 erfolgt in der Weise, daß die aus weichem, mit einem Bindemittel imprägniertem Faserverbundmaterial bestehenden Innenprofilleisten 8, 10 und 11 über Formkerne 13 zu im Querschnitt U-förmigen Profilleisten verformt und um die Grundkörper 2 herum aufgebaut werden. Insbesondere erfolgt zuerst auf dem inneren Formkern 13, der entfernbar ist, ein Verformen der Innenprofilleiste 8 sowie der weiteren Innenprofilleistenstücke 10 und 11. Hiernach werden die Deckplatten 6 auf den Grundkörper 2 aufgetragen, mit denen eine beiderseitige flächige Überdekkung des gesamten Grundkörpers 2 einschließlich der Schenkel der Innenprofilleisten 7, 9 und 12 geformt, derart, daß sie mit ihren Schenkeln 7a, 8a, 12a die Deckplatte 5, 6 randseitig übergreifen. Über Stützelemente 14, 15 und 16 werden die derart geformten Außenprofilleisten 7, 9 und 12 zum Grundkörper 2 gehalten. Hiernach erfolgt in einem Arbeitsgang ein Aushärten des Faserverbundwerkstoffs mit einem gleichzeitigen Verbinden der einzelnen Lenkerteile untereinander zu einer Einheit in einem Autoklav.

## Patentansprüche

1. Radführungslenker, insbesondere Dreieckslenker für ein Kraftfahrzeug in Leichtbauweise, der in einer etwa horizontalen Ebene im Fahrzeug angeordnet ist und eine der Fahrbahn zugerichtete untere Fläche sowie eine der Fahrbahn abgekehrte obere Fläche aufweist, dadurch gekennzeichnet, daß der Lenker (1) einen im Querschnitt rechteckförmigen Grundkörper (2) aus Hartschaum umfaßt, der an seiner unteren und oberen Fläche (3, 4) jeweils mit einer ausgehärteten, faserverstärkten Deckplatte (5, 6) versehen ist und die Begrenzungskanten am Umfang des Grundkörpers (2) aus ausgehärteten faserverstärkten innen- und außenliegenden Profilleisten (7 bis 12) bestehen, die zusammen einen Hohlträger bilden, der mit den Deckplatten (5, 6) und dem Grundkörper (2) stoffschlüssig zu einer Festigkeitseinheit verbunden sind.

2. Lenker nach Anspruch 1, dadurch gekennzeichnet, daß die Profilleisten (7 bis 12) im Querschnitt U-profilförmig ausgebildet sind, wobei die abschließenden außenliegenden Profilleisten (7, 9, 12) mit ihren Schenkeln den mit Deckplatten (5, 6) verbundenen Grundkörper (2) und teilweise die am Umfang angeordneten innenliegenden Profilleisten (8, 10, 11) übergreifen.

3. Lenker nach den Ansprüchen 1 oder 2, dadurch gekennzeichnet, daß die innenliegenden Profilleisten (8, 10, 11) mit ihrem Steg (8a, 10a, 11a) den Stirnflächen am Umfang des Grundkörpers (2) derart zugerichtet sind, daß die Schenkel in einer Ebene mit der oberen und unteren Fläche (3, 4) des Grundkörpers (2) und bündig abschließend mit diesem verlaufen.

4. Lenker nach den Ansprüchen 1 bis 3, dadurch gekennzeichnet, daß die Schenkel der innen- und außenliegenden Profilleisten (7, 8, 12) endseitig jeweils flächige Verbreiterungen (17, 18) aufweisen.

5. Lenker nach Anspruch 1, dadurch gekennzeichnet, daß von den außen- und innenliegenden Profilleisten (7, 9, 12 und 8, 10, 11) sowie von den Deckplatten (5, 6) Lageraugen (20) mit einer horizontalen Schwenkachse an einer Seite (L oder V) des Lenkers (1) und gegenüberliegend ein weiteres Lagerauge mit einer vertikalen Schwenkachse gebildet werden und diese Lageraugen (20) in den Lenker (1) integriert sind.

6. Lenker nach Anspruch 1, dadurch gekennzeichnet, daß zur Bildung eines Lagers (19) für einen Stabilisator die Schenkel (7a) der Profilleisten (7) eine flächige Erweiterung (19a) mit einer Öffnung aufweist, in die eine Metallbuchse eingesetzt ist.

7. Lenker nach Anspruch 1, dadurch gekennzeichnet, daß die Profilleisten (7 bis 12) aus einem Faserverbundwerkstoff mit Hochleistungsfasern mit einem überwiegend uni-direktionalen Faserverlauf bestehen.

8. Lenker nach Anspruch 1, dadurch gekennzeichnet, daß die Deckplatten (5, 6) einen quasi isotropen Faserverlauf aufweisen und, je nach gewünschter Steifigkeit, die Fasern in Vorzugsrichtungen ausgerichtet sind.

9. Lenker nach Anspruch 1, dadurch gekennzeichnet, daß der Grundkörper (2) aus isotropem Material, wie geschlossenzelligem Polyimid-Hartschaum, besteht.

10. Verfahren zur Herstellung eines Radführungslenkers nach den Ansprüchen 1 bis 10, dadurch gekennzeichnet, daß die innen- und außenliegenden Profilleisten sowie die Deckplatten in einem nicht ausgehärteten Zustand aus weichem, mit einem Bindemittel imprägnierten Faserverbundmaterial, sogenannten Prepregs, bestehen und aus diesem Material über die Formkerne und Stützelemente die Profile der Lenker geformt und um den Grundkörper herumgebaut werden und die Lenkerteile dann unter Aktivierung und Härtung des Bindemittels zu einem einteiligen Lenker verbunden werden.

11. Verfahren zur Herstellung eines Radführungslenkers nach den Ansprüchen 1 bis 11, dadurch gekennzeichnet, daß

a) durch ein Verformen des Faserverbundmaterials auf dem inneren Formkern zunächst die innenliegenden Profilleisten hergestellt und in einer endgültigen Lage zum Grundkörper gebracht werden,

b) dann wird der Grundkörper mit den am Umfang angeordneten innenliegenden Profilleisten von beiden Seiten mit dem Faserverbundmaterial in Plattenstärke beschichtet,

c) danach werden die aus dem Faserverbundmaterial bestehenden außenliegenden Profilleisten durch ein Ablegen ihrer Schenkel auf den Deckplatten hergestellt, wobei der Steg der Profilleisten über das äußere Stützelement am Grundkörper bzw. an den innenliegenden Profilleisten gehalten wird,

d) anschließend erfolgt in einem Arbeitsgang ein Aushärten des Faserverbundwerkstoffes mit gleichzeitigem Verbinden der einzelnen Lenkerteile zu einer Einheit in einem Autoklav.

**Revendications**

1. Levier de guidage de roue, notamment levier triangulaire pour un véhicule à moteur de construction légère, lequel levier est disposé dans le véhicule dans un plan sensiblement horizontal et comporte une surface inférieure orientée vers la chaussée ainsi qu'une surface supérieure opposée à la chaussée, caractérisé en ce que le levier (1) comporte un corps (2) en mousse dure, de section transversale rectangulaire, qui est muni sur ses surfaces, inférieure et supérieure, (3, 4) respectivement d'une plaque de recouvrement (5, 6) durcie, renforcée de fibres, et en ce que les arêtes de délimitation sur la périphérie du corps (2) sont constituées par des baguettes profilées (7 à 12) durcies et renforcées de fibres, situées à l'intérieur et à l'extérieur, lesquelles constituent ensemble une poutre creuse, qui est reliée par le matériau lui-même aux plaques de recouvrement (5, 6) et au corps (2) pour former une unité résistante.

2. Levier selon la revendication 1, caractérisé en ce que les baguettes profilées (7 à 12) ont une section transversale en U et les baguettes profilées extérieures de fermeture (7, 9, 12) recouvrent par leurs ailes le corps (2) relié aux plaques de recouvrement (5, 6) et recouvrent partiellement les baguettes profilées (8, 10, 11) situées à l'intérieur sur la périphérie.

3. Levier selon les revendications 1 ou 2, caractérisé en ce que les baguettes profilées (8, 10, 11) situées à l'intérieur ont leurs dos (8a, 10a, 11a) tournés vers les surfaces frontales sur la périphérie du corps (2) de telle sorte que les ailes se trouvent dans un même plan avec la surface supérieure et la surface inférieure (3, 4) du corps (2) en affleurant au même niveau et en fermant le corps.

4. Levier selon les revendications 1 à 3, caractérisé en ce que les ailes des baguettes profilées (7, 8, 12) situées à l'intérieur et à l'extérieur comporte à leurs extrémités des élargissements surfaciques (15, 18, 17).

5. Levier selon la revendication 1, caractérisé en ce que les baguettes profilées situées à l'extérieur et à l'intérieur (7, 9, 12 et 8, 10, 11) ainsi que les plaques de recouvrement (5, 6) forment des paliers (20) ayant un axe de pivotement horizontal, sur un côté (L ou V) du palier, et du côté opposé un autre palier ayant un axe de pivotement vertical, et en ce que ces paliers (20) sont intégrés dans le levier (1).

6. Levier selon la revendication 1, caractérisé en ce que, pour former un palier (19) pour un stabilisateur, les ailes (7a) des baguettes profilées (7) comportent un élargissement surfacique (19a) muni d'un orifice dans lesquels on introduit un manchon métallique.

7. Levier selon la revendication 1, caractérisé en ce que les baguettes profilées (7 à 12) sont constituées par un matériau composite à base de fibres de grande résistance dont l'orientation est principalement unidirectionnelle.

8. Levier selon la revendication 1, caractérisé en ce que les fibres des plaques de recouvrement (5, 6) ont une orientation quasi isotrope, et selon la rigidité recherchée, les fibres sont orientées dans des directions préférentielles.

9. Levier selon la revendication 1, caractérisé en ce que le corps (2) est en un matériau isotrope, tel que de la mousse polyimide dure à cellules fermées.

10. Procédé pour fabriquer un levier de guidage de roue selon les revendications 1 à 9, caractérisé en ce que les baguettes profilées situées à l'intérieur et à l'extérieur ainsi que les plaques de recouvrement, sont constituées, à l'état non durci, par un matériau composite à base de fibres imprégnées de liant, qu'il est convenu d'appeler feuilles préimprégnées, et qu'à partir de ce matériau on moule à l'aide des noyaux de moule et des éléments de soutien les profilés des leviers et on les monte autour du corps, et les composants du levier sont ensuite reliés par activation et durcissement du liant, pour former un levier monobloc.

11. Procédé pour fabriquer un levier de guidage de roue selon les revendications 1 à 10, caractérisé en ce que:

(a) en moulant le matériau composite à base de fibres sur le noyau de moule intérieur, on fabrique d'abord les baguettes profilées situées à l'intérieur et on les amène en position finale sur le corps,

(b) le corps avec les baguettes profilées intérieures disposées sur la périphérie est revêtu des deux côtés avec le matériau composite à base de fibres avec l'épaisseur de plaques.

(c) les baguettes profilées extérieures constituées par le matériau composite à base de fibres sont ensuite fabriquées en plaçant leurs ailes sur les plaques de recouvrement, le dos des baguettes profilées étant tenu contre le corps ou les baguettes profilées intérieures par l'élément de soutien extérieur,

(d) on effectue ensuite en autoclave, en une seule opération, le durcissement du matériau composite à base de fibres en même temps que les différents composants du levier se lient pour former une unité.

**Claims**

1. A wheel radius arm, in particular a triangular radius arm for a motor vehicle of light construction, arranged in an approximately horizontal plane in the vehicle and having a lower face towards the roadway and an upper face remote from the roadway, characterized in that the radius arm (1) comprises a main body (2) of hard foam and of rectangular cross-section and provided on each of its lower and upper faces (3, 4) with an age-hardened fibre-reinforced cover plate (5, 6), and the boundary edges on the periphery of the main body (2) consist of age-hardened fibre-reinforced inner and outer profiled strips (7 to 12) which together form a hollow support integrally joined to the cover plates (5, 6) and the main body (2) to form a solid unit.

2. A radius arm according to Claim 1, characterized in that the profiled strips (7 to 12) are made U-shaped in cross-section, the final outer profiled strips (7, 9, 12) engaging with their flanges over the main body (2) connected to cover plates (5, 6) and partly over the inner profiled strips (8, 10, 11) arranged on the periphery.

3. A radius arm according to Claim 1 or 2, characterized in that the inner profiled strips (8, 10, 11) are orientated with their webs (8a, 10a, 11a) towards the end faces on the periphery of the main body (2) in such a way that the flanges extend in one plane with the upper and lower faces (3, 4) of the main body (2) and terminate flush therewith.

4. A radius arm according to Claims 1 to 3, characterized in that the flanges of the inner and outer profiled strips (7, 8, 12) each have flat enlargements (17, 18) at their ends.

5. A radius arm according to Claim 1, characterized in that bearing eyes (20) with a horizontal pivot axis are formed by the outer and inner profiled strips (7, 9, 12 and 8, 10, 11) and by the cover plates (5, 6) on one side (L or V) of the radius arm (1) and an additional bearing eye with a vertical pivot axis is formed opposite, and these bearing eyes (20) are integrated in the radius arm (1).

6. A radius arm according to Claim 1, characterized in that in order to form a bearing (19) for a stabilizer the webs (7a) of the profiled strips (7) have a flat enlargement (19a) with an opening into which a metal sleeve is inserted.

7. A radius arm according to Claim 1, characterized in that the profiled strips (7 to 12) consist of a fibre-composite material with high-capacity fibres with a predominantly unidirectional fibre pattern.

8. A radius arm according to Claim 1, characterized in that the cover plates (5, 6) have a quasiisotropic fibre pattern and, depending upon the desired degree of rigidity, the fibres are orientated in preferred directions.

9. A radius arm according to Claim 1, characterized in that the main body (2) consists of isotropic material, such as closed-cell polyimide hard foam.

10. A method of producing a wheel radius arm according to Claims 1 to 10, characterized in that the inner and outer profiled strips and the cover plates consist in a non-age-hardened state of soft fibre-composite material impregnated with a binder, so-called prepregs, and the sections of the radius arms are moulded from this material by way of the mould cores and support elements and are constructed around the main body, and the parts of the radius arm are then joined by activation and age-hardening of the binder to form an integral radius arm.

11. A method of producing a wheel radius arm according to Claims 1 to 11, characterized in that.

a) the inner profiled strips are first produced by a deformation of the fibre-composite material on the inner mould core and are applied to the main body in a final position;

b) the main body with the inner profiled strips arranged on the periphery is then coated on both sides with the fibre-composite material in plate thickness;

c) the outer profiled strips consisting of the fibre-composite material are then produced by laying their flanges on the cover plates, the web of the profiled strips being held by way of the outer support element on the main body or on the inner profiled strips;

d) age-hardening of the fibre-composite material is then carried out in one operating step in an autoclave with simultaneous joining of the individual parts of the radius arm to form one unit.

Fig. 1

FIG.2

FIG.3

FIG.4

FIG.5

EP 0 199 885 B1

FIG.6